# EUROPÄISCHE PATENTSCHRIFT

(11) **EP 2 562 064 B1**
(45) Veröffentlichungstag und Bekanntmachung des Hinweises auf die Patenterteilung: **01.10.2014**
(21) Anmeldenummer: 12004942.4
(22) Anmeldetag: 04.07.2012
(51) Int. Cl.: B62D 7/15

(54) **Kraftfahrzeug**
Motor vehicle
Véhicule automobile

(30) Priorität: 23.08.2011 DE 102011111420
(43) Veröffentlichungstag der Anmeldung: 27.02.2013
(73) Patentinhaber: AUDI AG, 85045 Ingolstadt (DE)
(72) Erfinder: Kossira, Christoph, 85053 Ingolstadt (DE); Müller, Hugo, 86701 Rohrenfels-Ballersdorf (DE); Voll, Ulrich, 80336 München (DE)
(74) Vertreter: Thielmann, Frank

(56) Entgegenhaltungen:
- DE-A1- 3 941 464
- DE-B4-102007 037 765
- US-A1- 2011 087 405

## Beschreibung

Die Erfindung betrifft ein Kraftfahrzeug, umfassend über ein Lenkrad lenkbare Vorderräder sowie über ein Stellelement automatisch lenkbare Hinterräder, welche Hinterräder bei einer Rückwärtsfahrt des Kraftfahrzeugs durch Betätigung des Stellelements reversibel und stetig zwischen einer zu der Lenkstellung der Vorderräder gleichsinnigen oder gegensinnigen Lenkstellung verstellbar sind, wobei die Ansteuerung des Stellelements auf Basis eines in einer Steuereinrichtung hinterlegten, die Stellung der Hinterräder relativ zur Stellung der Vorderräder betreffenden Kennfelds erfolgt.

Bei einer Rückwärtsfahrt gestaltet sich die Handhabung respektive Kontrolle eines Kraftfahrzeugs, welches lediglich eine lenkbare Vorderachse aufweist, für den Fahrer oft schwierig, da bezogen auf die rückwärtige Fahrtrichtung quasi eine Hinterradlenkung gegeben ist. Für den Fahrer ergibt sich ein instabiles Fahrverhalten, in dem das Kraftfahrzeug bei auch nur geringer Auslenkung der Vorderräder sofort zur Seite fährt. Dabei kommt es häufig zu einer Pendelbewegung, was durch Gegenlenken oftmals nur schwer zu korrigieren ist. Die Schwierigkeit der Rückwärtsfahrt ist zumeist durch den weit schwenkenden Vorderwagen und den Umstand, dass der Fahrer die Bahnkurve der Hinterräder, resultierend aus der Vorderradauslenkung, üblicherweise nicht vorhersehen kann, begründet.

Aus DE 10 2007 037 765 B4 ist ein Kraftfahrzeug mit über ein Lenkrad lenkbaren Vorderrädern sowie zusätzlich automatisch lenkbaren Hinterrädern bekannt. Bei einer Rückwärtsfahrt sind die lenkbaren Hinterräder in Abhängigkeit des Lenkwinkels der Vorderräder reversibel und stetig zwischen einer zu der Lenkstellung der Vorderräder gleichsinnigen und gegensinnigen Lenkstellung verstellbar. Der Steuerung der Hinterräder liegt ein Kennfeld zugrunde, wobei in einem Lenkwinkelintervall zwischen 0° und einem vorbestimmten Grenzwinkel mit zunehmendem Lenkwinkel die Hinterräder ausgehend von einer Nullstellung zunächst zunehmend gleichsinnig bis zum Erreichen einer maximalen Auslenkung und anschließend abnehmend bis zur Einnahme der Nullstellung bei Erreichen des Grenzwinkels verstellbar sind, und im Lenkwinkelintervall zwischen dem vorbestimmten Grenzwinkel und dem maximalen Lenkwinkel zunehmend gegensinnig bis zum Erreichen der maximalen Auslenkung verstellbar sind.

Mithin sieht der in dem dort verwendeten Kennfeld hinterlegte, die Stellung der Hinterräder relativ zu den Vorderrädern angebende Proportionalfaktor beim Lenken vom linken zum rechten Anschlag, oder umgekehrt, einen Übergang von einer gegensinnigen in eine gleichsinnige und wieder in eine gegensinnige Stellung der Hinterräder relativ zu den Vorderrädern vor. Bei diesem Manöver beginnen die Hinterräder, insbesondere bei konstanter niedriger Geschwindigkeit, zu "Flattern". Der subjektive Fahreindruck ist nicht zufriedenstellend.

Der Erfindung liegt damit das Problem zugrunde, ein Kraftfahrzeug mit einem verbesserten Fahrverhalten bei der Rückwärtsfahrt anzugeben.

Das Problem wird erfindungsgemäß durch ein Kraftfahrzeug der eingangs genannten Art gelöst, welches sich dadurch auszeichnet, dass wenigstens zwei unterschiedliche Kennfelder in der Steuereinrichtung hinterlegt sind, wobei die Steuereinrichtung zur Auswahl eines Kennfeldes in Abhängigkeit wenigstens eines die Position und/oder die Positionsänderung des Lenkrads betreffenden Parameters ausgebildet ist.

Der Erfindung liegt der Gedanke zugrunde, eine Steuereinrichtung mit mehreren hinterlegten Kennfeldern vorzusehen, wobei auf Basis eines entsprechenden Kennfelds die Ansteuerung des Stellelements zur automatischen Bewegung der lenkbaren Hinterräder relativ zu den Vorderrädern erfolgt. Ein Kennfeld enthält dabei beispielsweise wenigstens einen Proportionalfaktor betreffend die Stellung der Hinterräder relativ zur Stellung der Vorderräder in Abhängigkeit des Lenkraddrehwinkels und der Fahrzeuggeschwindigkeit, wobei negative Werte des Proportionalfaktors eine gegensinnige Stellung der Hinterräder relativ zu den Vorderrädern und positive Werte des Proportionalfaktors eine gleichsinnige Stellung der Hinterräder relativ zu den Vorderrädern anzeigen. Üblicherweise ist ein Kennfeld als dreidimensionale Wertetabelle des Proportionalfaktors gegen den Lenkraddrehwinkel sowie die Fahrzeuggeschwindigkeit (der Rückwärtsfahrt) zu verstehen. Mithin sind in dem Kennfeld sämtliche zur Ansteuerung des Stellmittels zur automatischen Stellung der lenkbaren Hinterräder erforderliche Parameter für unterschiedliche Betriebs- oder Fahrzustände des Kraftfahrzeugs enthalten.

Die Steuereinrichtung ist zur Auswahl eines entsprechenden Kennfelds in Abhängigkeit wenigstens eines die Position und/oder die Positionsänderung des Lenkrads betreffenden Parameters ausgebildet. Die Auswahl eines entsprechenden Kennfelds kann demnach bezogen auf die aktuelle Fahr- und/oder Betriebssituation des Kraftfahrzeugs situationsgerecht erfolgen, sodass für unterschiedliche Fahr- und/oder Betriebssituationen unterschiedliche Kennfelder ausgewählt und der Ansteuerung des Stellmittels zugrunde gelegt werden. Es ergeben sich hierbei folgende mögliche Konstellationen:

Die Auswahl eines Kennfelds kann in Abhängigkeit eines die Position des Lenkrads betreffenden Parameters erfolgen. Dieser ist im Wesentlichen als Lenkraddrehwinkel zu verstehen und beschreibt qualitativ oder quantitativ die Verstellung des Lenkrads bezüglich einer Referenzposition, welche üblicherweise, jedoch nicht zwangsläufig, der Nullstellung, in der sich die Vorderräder parallel zur Fahrzeugachse befinden, entspricht. Aus dem die Position des Lenkrads betreffenden Parameter lassen sich sonach in Abhängigkeit der jeweiligen Übersetzung zwischen Lenkrad und Vorderrädern auch Rückschlüsse auf die Stellung bzw. Auslenkung der Vorderräder ziehen.

Alternativ kann ein die Positionsänderung des Lenkrads betreffender Parameter von der Steuereinrichtung bei der Auswahl eines für eine Rückwärtsfahrt geeigneten Kennfelds zur Ansteuerung des Stellmittels zur automatischen Steuerung der lenkbaren Hinterräder berücksichtigt werden. Unter einer entsprechenden Positionsänderung ist insbesondere die zeitliche Änderung des Lenkraddrehwinkels, das heißt die Lenkraddrehwinkelgeschwindigkeit, zu verstehen. Mithin wird also erfasst, mit welcher Geschwindigkeit eine Bewegung des Lenkrads erfolgt. Die Drehung des Lenkrads erfolgt üblicherweise über eine entsprechende Lenkradbetätigung des Fahrers, jedoch können hier auch, etwa bei Verwendung eines Fahrerassistenzsystems zum automatischen Rückwärtsparken, auftretende Lenkraddrehwinkelgeschwindigkeiten erfasst und berücksichtigt werden.

Denkbar ist es auch, sowohl einen die Position des Lenkrads als auch einen die Positionsänderung des Lenkrads betreffenden Parameter zu verwenden. Derart kann die Auswahl eines entsprechenden Kennfelds auf Grundlage einer umfassenden Berücksichtigung aller wesentlicher das Lenkrad betreffender Parameter durchgeführt werden.

Für sämtliche Parameter können Grenzwerte oder Grenzwertbereiche festgelegt sein, bei Erreichen, Über- oder Unterschreiten welcher eine Auswahl eines entsprechenden Kennfelds erfolgt.

Wie erwähnt, ist es bevorzugt, dass der Parameter ein Grenzwert für die zeitliche Änderung des Lenkraddrehwinkels und/oder die zeitliche Änderung der Lenkraddrehwinkelgeschwindigkeit ist. Mithin kann kontinuierlich oder intermittierend eine Erfassung des Lenkraddrehwinkels bzw. der Lenkraddrehwinkelgeschwindigkeit erfolgen, sodass die Lenkbewegungen zeitlich hochaufgelöst erfasst und der Auswahl eines Kennfelds zugrunde gelegt werden können.

In Weiterbildung der Erfindung ist es denkbar, dass die Steuereinrichtung zur Auswahl und Verwendung eines ersten Kennfelds ausgebildet ist, wenn der Lenkraddrehwinkel für eine bestimmte Zeitdauer (Zeitintervall), insbesondere wenigstens 1000 ms, in einem bestimmten Lenkraddrehwinkelbereich, insbesondere von 0 +/- 10°, liegt und die Lenkraddrehwinkelgeschwindigkeit in der bestimmten Zeitdauer eine Lenkraddrehwinkelgrenzgeschwindigkeit, insbesondere von 100°/s, nicht überschreitet. Das erste Kennfeld kann sonach bei einem über eine gegebene Zeitdauer unveränderlichen bzw. unter Berücksichtigung eines Toleranzbereichs nur geringfügig veränderlichen Lenkraddrehwinkel innerhalb eines Lenkraddrehwinkelbereichs bzw. Lenkraddrehwinkelintervalls sowie bei einer in der gegebenen Zeitdauer konstanten Beibehaltung einer Lenkraddrehwinkelgeschwindigkeit unterhalb einer gegebenen Lenkraddrehwinkelgrenzgeschwindigkeit ausgewählt werden.

Die Zeitdauer ist bevorzugt 1000 ms, kann jedoch in Sonderfällen auch kleiner oder größer sein. Entsprechendes gilt für den lediglich beispielhaft angegebenen Lenkraddrehwinkelbereich von 0 +/- 10° bzw. die Lenkraddrehwinkelgrenzgeschwindigkeit von 100°/s.

Das erste Kennfeld kann zum Beispiel im Bereich bis zu einer Fahrzeuggrenzgeschwindigkeit zwischen zwei maximalen Lenkraddrehgrenzwinkeln, insbesondere von +/- 300°, einen Übergang von einem eine gegensinnige Stellung der Hinterräder relativ zu den Vorderrädern anzeigenden negativen Proportionalfaktor zu einem eine gleichsinnige Stellung der Hinterräder relativ zu den Vorderrädern angebenden positiven Proportionalfaktor und wieder zu einem eine gegensinnige Stellung der Hinterräder relativ zu den Vorderrädern anzeigenden negativen Proportionalfaktor vorsehen. Das erste Kennfeld entspricht sonach im Wesentlichen dem aus dem Stand der Technik Bekannten, wird erfindungsgemäß jedoch nicht standardmäßig, sondern ausschließlich in bestimmten Situationen, wie vorstehend beschrieben, ausgewählt und verwendet.

Bevorzugt hat der Verlauf des Proportionalfaktors im ersten Kennfeld bis zu einer Fahrzeuggrenzgeschwindigkeit zwischen den beiden maximalen Lenkraddrehgrenzwinkeln wenigstens zwei Nulldurchgänge, in denen die Stellung der Hinterräder zu den Vorderrädern von gleichsinnig auf gegensinnig, oder umgekehrt, wechselt, wobei die beiden Nulldurchgänge insbesondere bei Lenkraddrehwinkeln im Bereich von 90 bis 135°, bevorzugt bei +/- 110°, liegen. Auch hier können die Nulldurchgänge in Sonderfällen bei anderen Lenkraddrehwinkeln liegen.

Die Steuereinrichtung kann ein zweites Kennfeld auswählen und verwenden, wenn der Lenkraddrehwinkel oberhalb eines bestimmten Lenkraddrehwinkels, insbesondere von +/- 130°, ist, oberhalb welches Lenkraddrehwinkels sich das erste und das zweite Kennfeld nicht unterscheiden. Mithin wird das zweite Kennfeld verwendet, wenn ein gegebener Lenkraddrehwinkel bzw. Lenkraddrehwinkelbereich überschritten wird, oberhalb welches sich das erste und das zweite Kennfeld, das heißt insbesondere die in diesen enthaltenen Proportionalfaktoren, nicht mehr unterscheiden. Gleiches gilt selbstverständlich bei mehr als zwei Kennfeldern. Der Lenkraddrehwinkel von +/- 130° ist lediglich exemplarisch und kann auch kleinere oder größere Werte einnehmen.

Das zweite Kennfeld kann im Bereich bis zu einer Fahrzeuggrenzgeschwindigkeit, insbesondere von 10 km/h, zwischen zwei maximalen Lenkraddrehgrenzwinkeln, insbesondere von +/- 300°, ausschließlich eine gegensinnige Stellung der Hinterräder relativ zu den Vorderrädern vorsehen. Mithin erfolgt die Rückwärtsfahrt auf Basis des zweiten Kennfelds innerhalb der maximalen Lenkraddrehgrenzwinkel stets mit einer gegensinnigen Stellung der Hinterräder relativ zu den Vorderrädern, sofern ein Überschreiten der Fahrzeuggrenzgeschwindigkeit bzw. eines entsprechenden Fahrzeuggrenzgeschwindigkeitsbereichs nicht erfolgt. Das im Rahmen des ersten Kennfelds beim Durchlenken von einem ersten maximalen Lenkraddrehgrenzwinkel zu einer neutralen Stellung bzw. weiter zu einem zweiten Lenkraddrehgrenzwinkel erfolgende gegensinnige, gleichsinnige und wieder gegensinnige Stellen der Hinterräder relativ zu den Vorderrädern entfällt somit bei Verwendung des zweiten Kennfelds, was das subjektive Fahrempfinden in bestimmten Fahrsituationen erheblich verbessert.

Daneben betrifft die Erfindung ein Verfahren zur Steuerung lenkbarer Hinterräder eines Kraftfahrzeugs, insbesondere des Kraftfahrzeugs wie vorstehend beschrieben, welches Kraftfahrzeug über ein Lenkrad lenkbare Vorderräder sowie über ein Stellelement automatisch lenkbare Hinterräder umfasst, welche Hinterräder bei einer Rückwärtsfahrt des Kraftfahrzeugs durch Betätigung des Stellelements reversibel und stetig zwischen einer zu der Längsstellung und der Vorderräder gleichsinnigen oder gegensinnigen Lenkstellung verstellbar sind, wobei die Ansteuerung des Stellelements auf Basis eines in einer Steuereinrichtung hinterlegten, die Stellung der Hinterräder relativ zur Stellung der Vorderräder betreffenden Kennfelds erfolgt. Das Verfahren zeichnet sich dadurch aus, dass wenigstens zwei unterschiedliche Kennfelder in der Steuereinrichtung hinterlegt sind, wobei die Steuereinrichtung ein Kennfeld in Abhängigkeit wenigstens eines die Position und/oder die Positionsänderung des Lenkrads betreffenden Parameters auswählt.

Sämtliche Ausführungen zum erfindungsgemäßen Kraftfahrzeug gelten auch für das erfindungsgemäße Verfahren.

Grundsätzlich enthält ein Kennfeld wenigstens einen Proportionalfaktor betreffend die Stellung der Hinterräder relativ zur Stellung der Vorderräder in Abhängigkeit des Lenkraddrehwinkels und der Fahrzeuggeschwindigkeit. Dabei zeigen negative Werte des Proportionalfaktors eine gegensinnige Stellung der Hinterräder relativ zu den Vorderrädern und positive Werte des Proportionalfaktors eine gleichsinnige Stellung der Hinterräder relativ zu den Vorderrädern an.

Bevorzugt wird als Parameter ein Grenzwert für die zeitliche Änderung des Lenkraddrehwinkels und/oder die zeitliche Änderung der Lenkraddrehwinkelgeschwindigkeit verwendet.

Die Steuereinrichtung wählt zweckmäßig ein erstes Kennfeld aus bzw. verwendet ein erstes Kennfeld, wenn der Lenkraddrehwinkel für eine bestimmte Zeitdauer, insbesondere wenigstens 1000 ms, in einem bestimmten Lenkraddrehwinkelbereich, insbesondere von 0 +/- 10°, liegt und die Lenkraddrehwinkelgeschwindigkeit in der bestimmten Zeitdauer eine Lenkraddrehwinkelgrenzgeschwindigkeit, insbesondere von 100°/s, nicht überschreitet.

Das erste Kennfeld sieht beispielsweise im Bereich bis zu einer Fahrzeuggrenzgeschwindigkeit zwischen zwei maximalen Lenkraddrehgrenzwinkeln, insbesondere von +/- 300°, einen Übergang von einem eine gegensinnige Stellung der Hinterräder relativ zu den Vorderrädern anzeigenden negativen Proportionalfaktor zu einem eine gleichsinnige Stellung der Hinterräder relativ zu den Vorderrädern angebenden positiven Proportionalfaktor und wieder zu einem eine gegensinnige Stellung der Hinterräder relativ zu den Vorderrädern anzeigenden negativen Proportionalfaktor vor. Dabei hat der Verlauf des Proportionalfaktors bis zu einer Fahrzeuggrenzgeschwindigkeit zwischen den beiden maximalen Lenkraddrehgrenzwinkeln insbesondere wenigstens zwei Nulldurchgänge, in denen die Stellung der Hinterräder relativ zu den Vorderrädern von gleichsinnig auf gegensinnig, oder umgekehrt, wechselt, wobei die beiden Nulldurchgänge insbesondere bei Lenkraddrehwinkeln im Bereich von 90 bis 135°, bevorzugt bei +/- 110°, liegen.

Zweckmäßig wählt und verwendet die Steuereinrichtung ein zweites Kennfeld, wenn der Lenkraddrehwinkel oberhalb eines bestimmten Lenkraddrehwinkels, insbesondere von +/- 130°, ist, oberhalb welches Lenkraddrehwinkels sich das erste und das zweite Kennfeld nicht unterscheiden. Das zweite Kennfeld sieht beispielsweise im Bereich bis zu einer Fahrzeuggrenzgeschwindigkeit, insbesondere von 10 km/h, zwischen zwei maximalen Lenkraddrehgrenzwinkeln, insbesondere von +/- 300°, ausschließlich eine gegensinnige Stellung der Hinterräder relativ zu den Vorderrädern vor.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs mit gleichsinnig ausgelenkten Vorder- und Hinterrädern;
- Fig. 2: das Kraftfahrzeug aus Fig. 1 mit gegensinnig ausgelenkten Vorder- und Hinterrädern;
- Fig. 3: ein erstes Kennfeld gemäß einer beispielhaften Ausführungsform; und
- Fig. 4: ein zweites Kennfeld gemäß einer beispielhaften Ausführungsform.

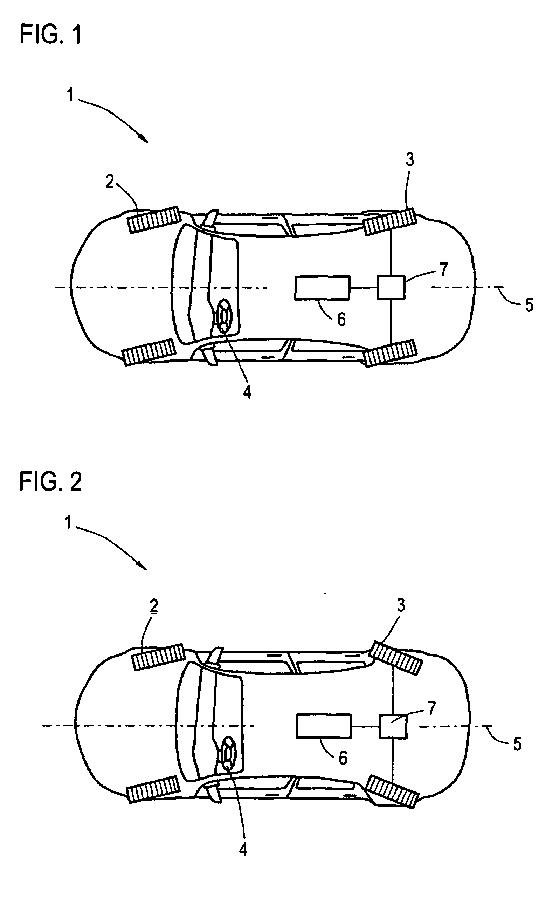

Fig. 1 zeigt eine Prinzipskizze eines erfindungsgemäßen Kraftfahrzeugs 1 mit gleichsinnig ausgelenkten, einer Vorderachse zugeordneten Vorderrädern 2 und einer Hinterachse zugeordneten Hinterrädern 3. Die Vorderräder 2 sind in bekannter Weise über ein Lenkrad 4 relativ zur Fahrzeuglängsachse 5 verstellbar. Bei dem erfindungsgemäßen Kraftfahrzeug 1 sind zusätzlich auch die Hinterräder 3 über ein von einer Steuereinrichtung 6 ansteuerbares Stellelement 7 automatisch lenkbar, das heißt relativ zur Fahrzeuglängsachse 5 verstellbar. Das heißt, die Hinterräder 3 sind bei einer Rückwärtsfahrt des Kraftfahrzeugs 1 durch Betätigung des Stellelements 7 reversibel und stetig zwischen einer zu der Lenkstellung der Vorderräder 2 gleichsinnigen oder gegensinnigen Lenkstellung verstellbar.

Fig. 1 zeigt die gleichsinnige Auslenkung von Vorderrädern 2 und Hinterrädern 3. Das heißt, die Hinterräder 3 sind in die gleiche Richtung verstellt wie die Vorderräder 2. Eine gleichsinnige Verstellung von Vorderrädern 2 und Hinterrädern 3 um den gleichen Verstellwinkel ermöglicht bezogen auf die Fahrzeuglängsachse 5 eine Bewegung des Kraftfahrzeugs 1 entlang einer im Wesentlichen der Orientierung der Vorder- bzw. Hinterräder 2, 3 entsprechenden schräg verlaufenden Linie.

Demgegenüber zeigt Fig. 2 das Kraftfahrzeug 1 aus Fig. 1 mit gegensinnig ausgelenkten Vorder- und Hinterrädern 2, 3. Hier sind folglich die Hinterräder 3 über das Stellelement 7 gegensinnig zu den Vorderrädern 2 ausgelenkt; während die Vorderräder 2 nach links eingeschlagen sind, sind die Hinterräder 3 nach rechts eingeschlagen. Entsprechend würde sich das Kraftfahrzeug 1 im Falle einer Fahrt entlang einer Kreisbahn bewegen.

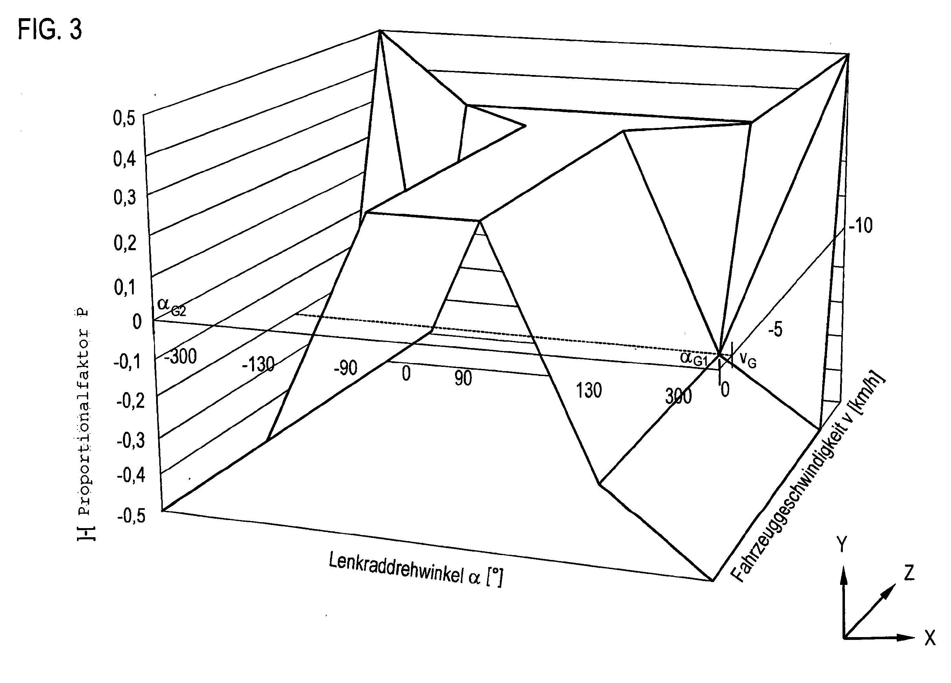

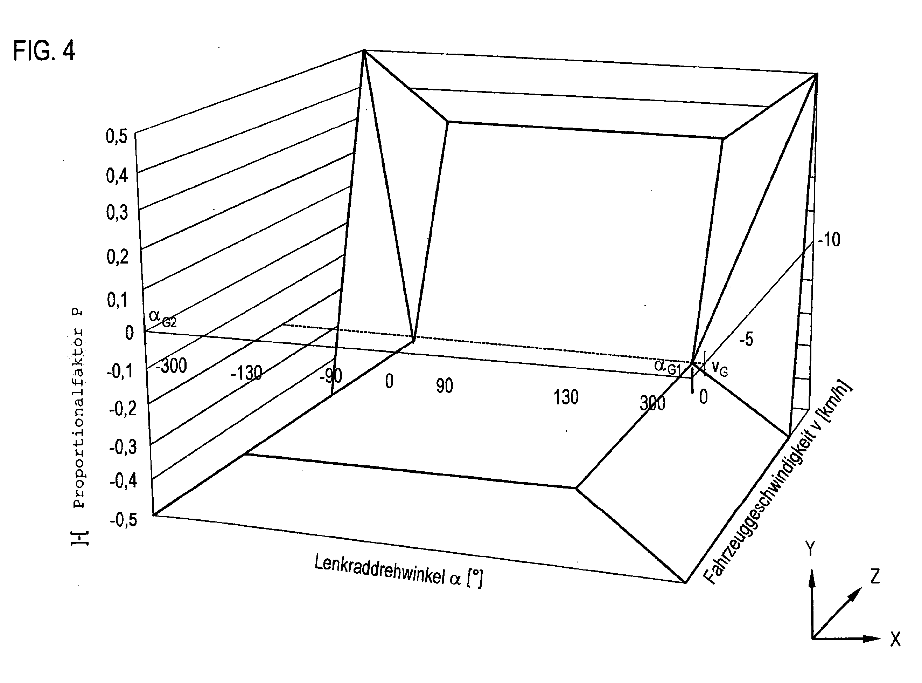

Wie erwähnt, erfolgt die Ansteuerung des Stellelements 7 durch die Steuereinrichtung 6, welche hierzu auf einen in dieser hinterlegten, die Stellung der Hinterräder 3 relativ zur Stellung der Vorderräder 2 betreffendes Kennfeld zugreift, das heißt, dieses der Ansteuerung des Stellelements 7 zugrunde legt. Entsprechende Kennfelder sind in den Fig. 3, 4 dargestellt. Grundsätzlich enthält ein Kennfeld wenigstens einen Proportionalfaktor P betreffend die Stellung der Hinterräder 3 relativ zur Stellung der Vorderräder 2 in Abhängigkeit des Lenkraddrehwinkels α und der Fahrzeuggeschwindigkeit v. Negative Werte des Proportionalfaktors P zeigen eine gegensinnige Stellung der Hinterräder 3 relativ zu den Vorderrädern 2 und positive Werte des Proportionalfaktors P eine gleichsinnige Stellung der Hinterräder 3 relativ zu den Vorderrädern 2 an. Demnach ist der Proportionalfaktor P für die in Fig. 1 gezeigte Konfiguration der Räder in dem jeweiligen Kennfeld positiv und entsprechend für die in Fig. 2 gezeigte Konfiguration der Räder in dem jeweiligen Kennfeld negativ.

Die Kennfelder sind als dreidimensionale Diagramme respektive diesen zugrunde liegende dreidimensionale Wertetabellen zu verstehen, sodass für jeden gegebenen Lenkraddrehwinkel α und jede Fahrzeuggeschwindigkeit v festgelegt ist, ob der Proportionalfaktor P positiv, negativ oder neutral, das heißt Null ist.

Erfindungsgemäß sind in der Steuereinrichtung 6 wenigstens zwei unterschiedliche Kennfelder hinterlegt. Die Steuereinrichtung 6 ist zur Auswahl eines Kennfeldes in Abhängigkeit wenigstens eines die Position und/oder die Positionsänderung des Lenkrads betreffenden Parameters ausgebildet. Der Parameter ist vorteilhaft ein Grenzwert für die zeitliche Änderung des Lenkraddrehwinkels α und/oder die zeitliche Änderung der Lenkraddrehwinkelgeschwindigkeit dα/dt. Der Lenkraddrehwinkel α ist als qualitative oder quantitative Stellung des Lenkrads 4 bezüglich einer Referenzposition, insbesondere der Nullstellung, zu verstehen. Die Lenkraddrehwinkelgeschwindigkeit dα/dt steht für die relative Änderung des Lenkraddrehwinkels α pro Zeiteinheit dt.

Erfindungsgemäß ist es vorgesehen, dass die Steuereinrichtung 6 ein erstes, in Fig. 3 gezeigtes Kennfeld auswählt und zur Ansteuerung des Stellelements 7 verwendet, wenn der Lenkraddrehwinkel a für eine bestimmte Zeitdauer dt, insbesondere wenigstens 1000 ms, in einem bestimmten Lenkraddrehwinkelbereich, insbesondere von α = 0 +/- 10°, liegt und die Lenkraddrehwinkelgeschwindigkeit dα/dt in der bestimmten Zeitdauer dt eine Lenkraddrehwinkelgrenzgeschwindigkeit dα/dt_{G}, insbesondere von dα/dt_{G} = 100°/s, nicht überschreitet.

Eine Auswahl und Verwendung eines zweiten, in Fig. 4 gezeigten Kennfelds erfolgt seitens der Steuereinrichtung 6, wenn der Lenkraddrehwinkel α oberhalb eines bestimmten Lenkraddrehwinkels α, insbesondere von α = +/-130°, ist, oberhalb welches Lenkraddrehwinkels α sich das erste und das zweite Kennfeld nicht unterscheiden.

Mit Bezug auf die Figuren 3, 4 werden exemplarische Beispiele für ein erstes und ein zweites Kennfeld näher beschrieben. Es handelt sich jeweils um eine dreidimensionale Auftragung des Proportionalfaktors P in Abhängigkeit des Lenkraddrehwinkels α und der Fahrzeuggeschwindigkeit v (bezogen auf eine Rückwärtsfahrt des Kraftfahrzeugs 1). Dabei entspricht jeweils bezogen auf ein kartesisches Koordinatensystem mit drei orthogonal zueinander ausgerichteten Achsen die nach oben zeigende y-Achse dem Proportionalfaktor P, die nach rechts zeigende x-Achse dem Lenkraddrehwinkel α und die nach hinten zeigende z-Achse der Fahrzeuggeschwindigkeit v. Wie erwähnt, zeigen positive Werte des Proportionalfaktors P eine gleichsinnige Stellung der Hinterräder 3 relativ zu den Vorderrädern 2 und negative Werte des Proportionalfaktors P eine gegensinnige Stellung der Hinterräder 3 relativ zu den Vorderrädern 2 an. Ersichtlich sind beide Kennfelder symmetrisch bezüglich einer sich durch einen Lenkraddrehwinkel α von 0° erstreckenden yz-Ebene.

Wie aus Fig. 3 ersichtlich ist, sieht das erste Kennfeld im Bereich bis zu einer Fahrzeuggrenzgeschwindigkeit v_{G} zwischen zwei maximalen Lenkraddrehgrenzwinkeln α_{G1, 2}, insbesondere von α_{G1} = 300° und α_{G2} = -300°, einen Übergang von einem eine gegensinnige Stellung der Hinterräder 3 relativ zu den Vorderrädern 2 anzeigenden negativen Proportionalfaktor P zu einem eine gleichsinnige Stellung der Hinterräder 3 relativ zu den Vorderrädern 2 anzeigenden positiven Proportionalfaktor P und wieder zu einem eine gegensinnige Stellung der Hinterräder 3 relativ zu den Vorderrädern 2 anzeigenden negativen Proportionalfaktor P vor. Dies ist insbesondere daran zu erkennen, dass der Proportionalfaktor P zwischen den beiden maximalen Lenkraddrehgrenzwinkeln α_{G1, 2} von +/- 300° in einem Geschwindigkeitsbereich bis zur Fahrzeuggrenzgeschwindigkeit v_{G}, welche beispielsweise bei 7 km/h liegt, zwei Nulldurchgänge aufweist, das heißt sein Vorzeichen zweimal wechselt. Bei einem Nulldurchgang des Proportionalfaktors P wechselt die Stellung der Hinterräder 3 relativ zu den Vorderrädern 2 von gleichsinnig auf gegensinnig oder umgekehrt. Die beiden Nulldurchgänge liegen bei Lenkraddrehwinkeln α im Bereich von 90 bis 135°, insbesondere bei Lenkraddrehwinkeln α von +/- 110°.

Im Unterschied zu dem in Fig. 3 gezeigten ersten Kennfeld, sieht das in Fig. 4 gezeigte zweite Kennfeld im Bereich bis zu einer Fahrzeuggrenzgeschwindigkeit v_{G}, welche beispielsweise ebenso bei ca. 7 km/h liegt, zwischen den beiden maximalen Lenkraddrehgrenzwinkeln α_{G1, 2}, insbesondere von +/-300°, ausschließlich eine gegensinnige Stellung der Hinterräder 3 relativ zu den Vorderrädern 2 vor. Dies zeigt sich an den durchweg negativen Werten des Proportionalfaktors P in diesem Bereich. Mithin sind hier beim Durchlenken, das heißt bei Verstellung des Lenkrads 4 von seiner linken maximalen Auslenkung, welche dem Lenkraddrehgrenzwinkel α_{G1} von -300° entspricht, zu seiner rechten maximalen Auslenkung, welche dem Lenkraddrehgrenzwinkel α_{G2} von + 300° entspricht, keine zwei Nulldurchgänge des Proportionalfaktors P vorgesehen. Die Stellung der Hinterräder 3 relativ zu den Vorderrädern 2 bleibt gegensinnig, sofern die Fahrzeuggrenzgeschwindigkeit v_{G} nicht überschritten wird.

Bezogen auf die geometrische Form der jeweiligen Kennfelder ausgedrückt, weist das zweite Kennfeld im Bereich bis zur Fahrzeuggrenzgeschwindigkeit v_{G} kein oberhalb des Nulldurchgangs durch den Proportionalfaktor P liegendes trapezförmiges Plateau auf. Der Proportionalfaktor P wird unabhängig vom Lenkraddrehwinkel α erst oberhalb der Fahrzeuggrenzgeschwindigkeit v_{G} positiv.

Das erfindungsgemäße Prinzip löst sonach das Problem, dass beim Durchlenken zwischen den beiden maximalen Lenkraddrehgrenzwinkeln α_{G1, 2} bei konstanter niedriger Fahrzeuggeschwindigkeit v unterhalb der jeweiligen Fahrzeuggrenzgeschwindigkeit v_{G} ein "Flattern" der Hinterräder 3 empfunden wird, wenn eine Änderung deren Stellung bezüglich der Vorderräder 2 von gegensinnig auf gleichsinnig und wieder auf gegensinnig erfolgt (vgl. die beiden Nulldurchgänge des Proportionalfaktors P in dem in Fig. 3 gezeigten ersten Kennfeld). Hier kann der Ansteuerung des Stellelements 7 das in Fig. 4 gezeigte zweite Kennfeld zugrunde gelegt werden, welches unterhalb der Fahrzeuggrenzgeschwindigkeit v_{G} keinen Nulldurchgang des Proportionalfaktors P vorsieht.

## Patentansprüche

1. Kraftfahrzeug (1), umfassend über ein Lenkrad (4) lenkbare Vorderräder (2) sowie über ein Stellelement (7) automatisch lenkbare Hinterräder (3), welche Hinterräder (3) bei einer Rückwärtsfahrt des Kraftfahrzeugs (1) durch Betätigung des Stellelements (7) reversibel und stetig zwischen einer zu der Lenkstellung der Vorderräder (2) gleichsinnigen oder gegensinnigen Lenkstellung verstellbar sind, wobei die Ansteuerung des Stellelements (7) auf Basis eines in einer Steuereinrichtung (6) hinterlegten, die Stellung der Hinterräder (3) relativ zur Stellung der Vorderräder (2) betreffenden Kennfelds erfolgt,
**dadurch gekennzeichnet,**
**dass** wenigstens zwei unterschiedliche Kennfelder in der Steuereinrichtung (6) hinterlegt sind, wobei die Steuereinrichtung (6) zur Auswahl eines Kennfeldes in Abhängigkeit wenigstens eines die Position und/oder die Positionsänderung des Lenkrads (4) betreffenden Parameters ausgebildet ist.

2. Kraftfahrzeug nach Anspruch 1,
**dadurch gekennzeichnet,**
**dass** der Parameter ein Grenzwert für die zeitliche Änderung des Lenkraddrehwinkels (α) und/oder die zeitliche Änderung der Lenkraddrehwinkelgeschwindigkeit (dα/dt) ist.

3. Kraftfahrzeug nach Anspruch 2,
**dadurch gekennzeichnet,**
**dass** die Steuereinrichtung (6) zur Verwendung eines ersten Kennfelds ausgebildet ist, wenn der Lenkraddrehwinkel (α) für eine bestimmte Zeitdauer (dt), insbesondere wenigstens 1000 ms, in einem bestimmten Lenkraddrehwinkelbereich, insbesondere von 0 +/- 10°, liegt und die Lenkraddrehwinkelgeschwindigkeit (dα/dt) in der bestimmten Zeitdauer (dt) eine Lenkraddrehwinkelgrenzgeschwindigkeit (dα/dt_{G}), insbesondere von 100°/s, nicht überschreitet.

4. Kraftfahrzeug nach Anspruch 2 oder 3,
**dadurch gekennzeichnet,**
**dass** die Steuereinrichtung (6) zur Verwendung eines zweiten Kennfelds ausgebildet ist, wenn der Lenkraddrehwinkel (α) oberhalb eines bestimmten Lenkraddrehwinkels (α), insbesondere von +/- 130°, ist, oberhalb welches Lenkraddrehwinkels (α) sich das erste und das zweite Kennfeld nicht unterscheiden.

5. Kraftfahrzeug nach einem der vorangehenden Ansprüchen,
**dadurch gekennzeichnet,**
**dass** ein Kennfeld wenigstens einen Proportionalfaktor (P) betreffend die Stellung der Hinterräder (3) relativ zur Stellung der Vorderräder (2) in Abhängigkeit des Lenkraddrehwinkels (α) und der Fahrzeuggeschwindigkeit (v) enthält, wobei negative Werte des Proportionalfaktors (P) eine gegensinnige Stellung der Hinterräder (3) relativ zu den Vorderrädern (2) und positive Werte des Proportionalfaktors (P) eine gleichsinnige Stellung der Hinterräder (3) relativ zu den Vorderrädern (2) anzeigen.

6. Kraftfahrzeug nach Anspruch 5,
**dadurch gekennzeichnet,**
**dass** das erste Kennfeld im Bereich bis zu einer Fahrzeuggrenzgeschwindigkeit (v_{G}), insbesondere von 10 km/h, zwischen zwei maximalen Lenkraddrehgrenzwinkeln (α_{G}), insbesondere von +/- 300°, einen Übergang von einem eine gegensinnige Stellung der Hinterräder (3) relativ zu den Vorderrädern (2) anzeigenden negativen Proportionalfaktor (P) zu einem eine gleichsinnige Stellung der Hinterräder (3) relativ zu den Vorderrädern (2) anzeigenden positiven Proportionalfaktor (P) und wieder zu einem eine gegensinnige Stellung der Hinterräder (3) relativ zu den Vorderrädern (2) anzeigenden negativen Proportionalfaktor (P) vorsieht.

7. Kraftfahrzeug nach Anspruch 6,
**dadurch gekennzeichnet,**
**dass** der Verlauf des Proportionalfaktors (P) bis zu einer Fahrzeuggrenzgeschwindigkeit (v_{G}) zwischen den beiden maximalen Lenkraddrehgrenzwinkeln (α_{G}) wenigstens zwei Nulldurchgänge hat, in denen die Stellung der Hinterräder (3) relativ zu den Vorderrädern (2) von gleichsinnig auf gegensinnig, oder umgekehrt, wechselt, wobei die beiden Nulldurchgänge insbesondere bei Lenkraddrehwinkeln (α) im Bereich von 90 bis 135°, bevorzugt bei +/- 110°, liegen.

8. Kraftfahrzeug nach einem der Ansprüche 5 bis 7,
**dadurch gekennzeichnet,**
**dass** das zweite Kennfeld im Bereich bis zu einer Fahrzeuggrenzgeschwindigkeit (v_{G}), insbesondere von 10 km/h, zwischen zwei maximalen Lenkraddrehgrenzwinkein (α_{G}), insbesondere von +/- 300°, ausschließlich eine gegensinnige Stellung der Hinterräder (3) relativ zu den Vorderrädern (2) vorsieht.

9. Verfahren zur Steuerung lenkbarer Hinterräder eines Kraftfahrzeugs, insbesondere des Kraftfahrzeugs nach einem der vorangehenden Ansprüche, welches Kraftfahrzeug über ein Lenkrad lenkbare Vorderräder sowie über ein Stellelement automatisch lenkbare Hinterräder umfasst, welche Hinterräder bei einer Rückwärtsfahrt des Kraftfahrzeugs durch Betätigung des Stellelements reversibel und stetig zwischen einer zu der Lenkstellung der Vorderräder gleichsinnigen oder gegensinnigen Lenkstellung verstellbar sind, wobei die Ansteuerung des Stellelements auf Basis eines in einer Steuereinrichtung hinterlegten die Stellung der Hinterräder relativ zur Stellung der Vorderräder betreffenden Kennfelds erfolgt,
**dadurch gekennzeichnet,**
**dass** wenigstens zwei unterschiedliche Kennfelder in der Steuereinrichtung hinterlegt sind, wobei die Steuereinrichtung ein Kennfeld in Abhängigkeit wenigstens eines die Position und/oder die Positionsänderung des Lenkrads betreffenden Parameters auswählt.

10. Verfahren nach Anspruch 9,
**dadurch gekennzeichnet,**
**dass** als Parameter ein Grenzwert für die zeitliche Änderung des Lenkraddrehwinkels und/oder die zeitliche Änderung der Lenkraddrehwinkelgeschwindigkeit verwendet wird.

11. Verfahren nach Anspruch 10,
**dadurch gekennzeichnet,**
**dass** die Steuereinrichtung ein erstes Kennfeld auswählt und verwendet, wenn der Lenkraddrehwinkel für eine bestimmte Zeitdauer, insbesondere wenigstens 1000 ms, in einem bestimmten Lenkraddrehwinkelbereich, insbesondere von 0 +/- 10°, liegt und die Lenkraddrehwinkelgeschwindigkeit in der bestimmten Zeitdauer eine Lenkraddrehwinkelgrenzgeschwindigkeit, insbesondere von 100°/s, nicht überschreitet.

12. Verfahren nach Anspruch 10 oder 11,
**dadurch gekennzeichnet,**
**dass** die Steuereinrichtung ein zweites Kennfeld auswählt und verwendet, wenn der Lenkraddrehwinkel oberhalb eines bestimmten Lenkraddrehwinkels, insbesondere von +/- 130°, ist, oberhalb welches Lenkraddrehwinkels sich das erste und das zweite Kennfeld nicht unterscheiden.

13. Verfahren nach einem der Ansprüche 9 bis 12,
**dadurch gekennzeichnet,**
**dass** ein verwendetes Kennfeld wenigstens einen Proportionalfaktor betreffend die Stellung der Hinterräder relativ zur Stellung der Vorderräder in Abhängigkeit des Lenkraddrehwinkels und der Fahrzeuggeschwindigkeit enthält, wobei negative Werte des Proportionalfaktors eine gegensinnige Stellung der Hinterräder relativ zu den Vorderrädern und positive Werte des Proportionalfaktors eine gleichsinnige Stellung der Hinterräder relativ zu den Vorderrädern anzeigen.

14. Verfahren nach Anspruch 13,
**dadurch gekennzeichnet, dass** bei dem ersten verwendeten Kennfeld im Bereich bis zu einer Fahrzeuggrenzgeschwindigkeit, insbesondere von 10 km/h, zwischen zwei maximalen Lenkraddrehgrenzwinkeln, insbesondere von +/- 300°, ein Übergang von einem eine gegensinnige Stellung der Hinterräder relativ zu den Vorderrädern anzeigenden negativen Proportionalfaktor zu einem eine gleichsinnige Stellung der Hinterräder relativ zu den Vorderrädern anzeigenden positiven Proportionalfaktor und wieder zu einem eine gegensinnige Stellung der Hinterräder relativ zu den Vorderrädern anzeigenden negativen Proportionalfaktor vorgesehen ist.

15. Verfahren nach Anspruch 13 oder 14,
**dadurch gekennzeichnet,**
**dass** das bei dem zweiten verwendetet Kennfeld im Bereich bis zu einer Fahrzeuggrenzgeschwindigkeit, insbesondere von 10 km/h, zwischen zwei maximalen Lenkraddrehgrenzwinkeln, insbesondere von +/-300°, ausschließlich eine gegensinnige Stellung der Hinterräder relativ zu den Vorderrädern vorgesehen ist.

## Claims

1. Motor vehicle (1) comprising front wheels (2), which can be steered by means of a steering wheel (4), and rear wheels (3), which can be automatically steered by means of an actuator (7), which rear wheels (3) can be reversibly and continuously adjusted between a steering position which is in the same direction as the front wheels (2) or a steering position which is in the opposite direction to the front wheels by actuating the actuator (7) when the motor vehicle (1) is travelling in reverse, the actuator (7) being controlled on the basis of a characteristic map which is stored in a control device (6) and relates to the position of the rear wheels (3) relative to the position of the front wheels (2),
**characterised in that**
at least two different characteristic maps are stored in the control device (6), the control device (6) being designed to select a characteristic map on the basis of at least one parameter relating to the position and/or the change in position of the steering wheel (4).

2. Motor vehicle according to claim 1,
**characterised in that**
the parameter is a limit for the change over time of the steering wheel rotation angle (α) and/or the change over time of the steering wheel rotation angle velocity (dα/dt).

3. Motor vehicle according to claim 2,
**characterised in that**
the control device (6) is designed to use a first characteristic map when the steering wheel rotation angle (α) is within a particular steering wheel rotation angle range, in particular from 0 +/- 10°, for a particular period of time (dt), in particular at least 1000 ms, and the steering wheel rotation angle velocity (dα/dt) does not exceed a steering wheel rotation angle velocity limit (dα/dt_{G}), in particular of 100 °/s, in the particular period of time (dt).

4. Motor vehicle according to either claim 2 or claim 3,
**characterised in that**
the control device (6) is designed to use a second characteristic map when the steering wheel rotation angle (α) is above a particular steering wheel rotation angle (α), in particular of +/- 130°, above which steering wheel rotation angle (α) there is no difference between the first and the second characteristic map.

5. Motor vehicle according to any of the preceding claims,
**characterised in that**
a characteristic map contains at least one proportionality factor (P) relating to the position of the rear wheels (3) relative to the position of the front wheels (2) on the basis of the steering wheel rotation angle (α) and of the vehicle velocity (v), negative values of the proportionality factor (P) indicating a position of the rear wheels (3) in the opposite direction relative to the front wheels (2) and positive values of the proportionality factor (P) indicating a position of the rear wheels (3) in the same direction relative to the front wheels (2).

6. Motor vehicle according to claim 5,
**characterised in that**,
in the range up to a vehicle velocity limit (v_{G}), in particular of 10 km/h, between two maximum steering wheel rotation limit angles (α_{G}), in particular of +/- 300°, the first characteristic map provides a transition from a negative proportionality factor (P), which indicates a position of the rear wheels (3) in the opposite direction relative to the front wheels (2), to a positive proportionality factor (P), which indicates a position of the rear wheels (3) in the same direction relative to the front wheels (2), and back again to a negative proportionality factor (P), which indicates a position of the rear wheels (3) in the opposite direction relative to the front wheels (2).

7. Motor vehicle according to claim 6,
**characterised in that**
the curve of the proportionality factor (P) has at least two zero crossings between the two maximum steering wheel rotation limit angles (α_{G}) up to a vehicle velocity limit (v_{G}), in which zero crossings the position of the rear wheels (3) relative to the front wheels (2) switches from the same direction to the opposite direction, or vice versa, the two zero crossings in particular being at steering wheel rotation angles (α) in the range of from 90 to 135°, preferably +/-110°.

8. Motor vehicle according to any of claims 5 to 7,
**characterised in that**,
in the range up to a motor vehicle limit velocity (v_{G}), in particular of 10 km/h, between two maximum steering wheel limit angles (α_{G}), in particular of +/- 300°, the second characteristic map only provides a position of the rear wheels (3) in the opposite direction relative to the front wheels (2).

9. Method for controlling steerable rear wheels of a motor vehicle, in particular of the motor vehicle according to any of the preceding claims, which motor vehicle comprises front wheels, which can be steered by means of a steering wheel, and rear wheels, which can be automatically steered by means of an actuator, which rear wheels can be reversibly and continuously adjusted between a steering position which is in the same direction as the front wheels or a steering position which is in the opposite direction to front wheels by actuating the actuator when the motor vehicle is travelling in reverse, the actuator being controlled on the basis of a characteristic map which is stored in a control device and relates to the position of the rear wheels relative to the position of the front wheels,
**characterised in that**
at least two different characteristic maps are stored in the control device, the control device selecting a characteristic map on the basis of at least one parameter relating to the position and/or the change in position of the steering wheel.

10. Method according to claim 9,
**characterised in that**
a limit for the change over time of the steering wheel rotation angle and/or the change over time of the steering wheel rotation angle velocity is used as a parameter.

11. Method according to claim 10,
**characterised in that**
the control device selects and uses a first characteristic map when the steering wheel rotation angle is in a particular steering wheel rotation angle range, in particular from 0 +/- 10°, for a particular period of time, in particular at least 1000 ms, and the steering wheel rotation angle velocity does not exceed a steering wheel rotation angle velocity limit, in particular of 100 °/s, in the particular period of time.

12. Method according to either claim 10 or claim 11,
**characterised in that**
the control device selects and uses a second characteristic map when the steering wheel rotation angle is above a particular steering wheel rotation angle, in particular of +/- 130°, above which steering wheel rotation angle there is no difference between the first and the second characteristic map.

13. Method according to any of claims 9 to 12,
**characterised in that**
a characteristic map that is used contains at least one proportionality factor relating to the position of the rear wheels relative to the position of the front wheels on the basis of the steering wheel rotation angle and of the vehicle velocity, negative values of the proportionality factor indicating a position of the rear wheels in the opposite direction relative to the front wheels and positive values of the proportionality factor indicating a position of the rear wheels in the same direction relative to the front wheels.

14. Method according to claim 13,
**characterised in that**, in the region up to a vehicle limit velocity, in particular of 10 km/h, between two maximum steering wheel rotation angle limits, in particular of +/- 300°, in the first characteristic map that is used there is provided a transition from a negative proportionality factor, which indicates a position of the rear wheels in the opposite direction relative to the front wheels, to a positive proportionality factor, which indicates a position of the rear wheels in the same direction relative to the front wheels, and back again to a negative proportionality factor, which indicates a position of the rear wheels in the opposite direction relative to the front wheels.

15. Method according to either claim 13 or claim 14,
**characterised in that**,
in the range up to a motor vehicle limit velocity, in particular of 10 km/h, between two maximum steering wheel limit angles, in particular of +/- 300°, in the second characteristic map that is used there is only provided a position of the rear wheels in the opposite direction relative to the front wheels.

## Revendications

1. Véhicule automobile (1), comprenant des roues avant (2) orientables via un volant de direction (4) ainsi que des roues arrière (3) dirigeables automatiquement via un élément de réglage (7), lesquelles roues arrière (3) peuvent être déplacées, lors d'une marche arrière du véhicule automobile, (1) par commande de l'élément de réglage (4), de façon réversible et continue entre une position d'orientation de même sens que la position d'orientation des roues avant (2) ou de sens contraire, dans lequel la commande de l'élément de réglage (7) se fait sur la base d'un champ caractéristique mémorisé dans un dispositif de commande (6) concernant la position des roues arrière (3) par rapport à la position des roues avant (2),
**caractérisé en ce que** :
au moins deux champs caractéristiques différents sont mémorisés dans le dispositif de commande (6), dans lequel le dispositif de commande (6) est conformé pour le choix d'un champ caractéristique en fonction d'au moins un paramètre concernant la position et/ou la modification de position du volant de direction (4).

2. Véhicule automobile selon la revendication 1, **caractérisé en ce que** :
le paramètre est une valeur limite pour la modification temporelle de l'angle de rotation (α) du volant de direction et/ou la modification temporelle de la vitesse de l'angle de rotation (dα/dt) du volant de direction.

3. Véhicule automobile selon la revendication 2, **caractérisé en ce que** :
le dispositif de commande (6) est conformé pour utiliser un premier champ caractéristique si l'angle de rotation (α) du volant de direction se situe pendant une période de temps déterminée (dt), en particulier d'au moins 1000 ms, dans une plage d'angle de rotation du volant de direction déterminée, en particulier de 0 +/- 10°, et que la vitesse (dα/dt) de l'angle de rotation du volant de direction dans la période de temps déterminée (dt) ne dépasse pas une vitesse limite d'angle de rotation (dα)dt_{G})· du volant de direction, en particulier de 100°/s.

4. Véhicule automobile selon la revendication 2 ou la revendication 3,
**caractérisé en ce que** :
le dispositif de commande (6) est conformé pour utiliser un second champ caractéristique si l'angle de rotation (α) du volant de direction est au-dessus d'un, angle de rotation (α) déterminé du volant de direction, en particulier de +/- 130°, au-dessus duquel angle de rotation (α) du volant de direction le premier et le second champ caractéristique ne se différencient pas.

5. Véhicule automobile selon l'une quelconque des revendications précédentes,
**caractérisé en ce que** :
un champ caractéristique contient au moins un facteur proportionnel (P) concernant la position des roues arrière (3) par rapport à la position des roues avant (2) en fonction de l'angle de rotation (α) du volant de direction et de la vitesse (v) du véhicule, dans lequel les valeurs négatives du facteur proportionnel (P) indiquent une position en sens inverse des roues arrière (3) par rapport aux roues avant (2) et les valeurs positives du facteur proportionnel (P) indiquent une position de même sens des roues arrière (3) par rapport aux roues avant (2).

6. Véhicule automobile selon la revendication 5, **caractérisé en ce que** :
le premier champ caractéristique prévoit dans la plage jusqu'à une vitesse limite (v_{G}) du véhicule, en particulier de 10 km/s, entre deux angles limites de rotation (α_{G}) maximaux du volant de direction, en particulier de +/- 300°, une transition d'un facteur proportionnel négatif (P) indiquant une position en sens inverse des roues arrière (3) par rapport aux roues avant (2) à un facteur proportionnel positif (P) indiquant une position dans le même sens des roues arrière (3) par rapport aux roues avant et à nouveau à un facteur proportionnel négatif (P) indiquant une position en sens inverse des roues arrière (3) par rapport aux roues avant (2).

7. Véhicule automobile selon la revendication 6, **caractérisé en ce que** :
la variation du facteur proportionnel (P) jusqu'à une vitesse limite (vg) du véhicule entre les deux angles limites de rotation (α_{G}) maximaux du volant de direction a eu moins deux passages par zéro, dans lesquels la position des roues arrière (3) par rapport aux roues avant (2) passe du même sens au sens inverse ou vice-versa, dans lequel les deux passages par zéro, en particulier lorsque les angles de rotation (α) du volant de direction se situent dans la plage de 90 à 135°, se trouvent de préférence à +/- 110°.

8. Véhicule automobile selon l'une quelconque des revendications 5 à 7,
**caractérisé en ce que** :
le second champ caractéristique prévoit dans la plage jusqu'à une vitesse limite (v_{G}) du véhicule, en particulier de 10 km/h, entre deux angles limites de rotation maximaux (α_{G}) du volant de direction, en particulier de +/- 300°, exclusivement une position en sens inverse des roues arrière (3) par rapport aux roues avant (2).

9. Procédé de commande de roues arrière orientables d'un véhicule automobile, en particulier du véhicule automobile selon l'une quelconque des revendications précédentes, lequel véhicule automobile comprend des roues avant orientables via un volant de direction ainsi que des roues arrière dirigeables automatiquement via un élément de réglage, lesquelles roues arrière peuvent être déplacées, lors d'une marche arrière du véhicule automobile, par commande de l'élément de,réglage, de façon réversible et continue entre une position d'orientation de même sens que la position d'orientation des roues avant ou de sens inverse, dans lequel la commande de l'élément de réglage se fait sur la base d'un champ caractéristique mémorisé dans un dispositif de commande concernant la position des roues arrière par rapport à la position des roues avant,
**caractérisé en ce que** :
au moins deux champs caractéristiques différents sont mémorisés dans le dispositif de commande, dans lequel le dispositif de commande choisit un champ caractéristique en fonction d'au moins un paramètre concernant la position et/ou la modification de position du volant de direction.

10. Procédé selon la revendication 9,
**caractérisé en ce que** :
l'on utilise comme paramètre une valeur limite pour la modification temporelle de l'angle de rotation du volant de direction et/ou pour la modification temporelle de la vitesse de l'angle de rotation du volant de direction.

11. Procédé selon la revendication 10,
**caractérisé en ce que** :
le dispositif de commande choisit et utilise un premier champ caractéristique si l'angle de rotation du volant de direction se situe pendant une période de temps déterminée, en particulier d'au moins 1000 ms, dans une plage d'angle de rotation du volant de direction déterminée, en particulier de 0 +/- 10°, et que la vitesse de l'angle de rotation du volant de direction dans la période de temps déterminée ne dépasse pas une vitesse limite d'angle de rotation du volant de direction, en particulier de 100°/s.

12. Procédé selon la revendication 10 ou la revendication 11,
**caractérisé en ce que** :
le dispositif de commande choisit et utilise un second champ caractéristique si l'angle de rotation du volant de direction est au-dessus d'un angle de rotation déterminé du volant de direction, en particulier de +/- 130°, au-dessus duquel angle de rotation du volant de direction le premier et le second champ caractéristique ne se différencient pas.

13. Procédé selon l'une quelconque des revendications 9 à 12,
**caractérisé en ce que** :
un champ caractéristique utilisé contient au moins un facteur proportionnel concernant la position des roues arrière par rapport à la position des roues avant en fonction de l'angle de rotation du volant de direction et de la vitesse du véhicule, dans lequel les valeurs négatives du facteur proportionnel indiquent une position en sens inverse des roues arrière par rapport aux roues avant et les valeurs positives du facteur proportionnel indiquent une position de même sens des roues arrière par rapport aux roues avant.

14. Procédé selon la revendication 13,
**caractérisé en ce que** :
dans le premier champ caractéristique utilisé dans la plage jusqu'à une vitesse limite du véhicule, en particulier de 10 km/s, entre deux angles limites de rotation maximaux du volant de direction, en particulier de +/- 300°, il est prévu une transition d'un facteur proportionnel négatif indiquant une position en sens inverse des roues arrière par rapport aux roues avant à un facteur proportionnel positif indiquant une position dans le même sens des roues arrière par rapport aux roues avant et à nouveau à un facteur proportionnel négatif indiquant une position dans le sens inverse des roues arrière par rapport aux roues avant.

15. Procédé selon la revendication 13 ou la revendication 14,
**caractérisé en ce que** :
dans le second champ caractéristique utilisé dans la plage jusqu'à une vitesse limite du véhicule, en particulier de 10 km/h, entre deux angles limites de rotation maximaux du volant de direction, en particulier de +/- 300°, il est prévu exclusivement une position en sens inverse des roues arrière par rapport aux roues avant.
